# EUROPEAN PATENT APPLICATION

(11) **EP 4 046 710 A1**
(43) Date of publication of application: **24.08.2022**
(21) Application number: 20897633.2
(22) Date of filing: 13.05.2020
(51) Int. Cl.: B01J 29/46, C10G 2/00

(54) **CORE-SHELL IRON-BASED CATALYST USED FOR DIRECT PRODUCTION OF AROMATIC HYDROCARBONS FROM SYNGAS, AND PREPARATION METHOD AND APPLICATION THEREFOR**

(71) Applicant: Guangzhou Institute of Energy Conversion, Chinese Academy of Sciences, Guangzhou 510640 (CN)
(72) Inventor: WANG, Chenguang, Guangzhou, Guangdong 510640 (CN); WEN, Chengyan, Guangzhou, Guangdong 510640 (CN); MA, Longlong, Guangzhou, Guangdong 510640 (CN); LIU, Qiying, Guangzhou, Guangdong 510640 (CN); ZHANG, Xinghua, Guangzhou, Guangdong 510640 (CN); CHEN, Lungang, Guangzhou, Guangdong 510640 (CN)
(74) Representative: Murgitroyd & Company
(86) International application number: PCT/CN2020/090025
(87) International publication number: WO 2021/147213

(57) **Abstract**

A core-shell iron-based catalyst for directly producing aromatics from syngas. The catalyst comprises a shell consisting of nano ZSM-5 zeolite having a silica to alumina molar ratio of 30-200, and a core consisting of surface-modified metal-oxide nano particles; the metal-oxide nano particles have a evenly distributed particle size of 1-3 nm, and a metal content of 0.1%wt-7%wt. The catalyst exhibits high CO conversion of up to 42.6%, high aromatic selectivity of up to 47.6% among total hydrocarbons (and up to 78.1% in oil phase), high concentration of aromatic products, and low selectivity for by-products CO₂ (only about 18.9%) and CH₄ (only about 14.0%), which solves the prior art problems of low aromatic selectivity and production, high selectivity for by-products CO₂ and CH₄, and low CO utilization during the direct production of aromatics from syngas.

## Description

### TECHNICAL FIELD

The present invention relates to the technical field of catalysts, and particularly relates to a core-shell iron-based catalyst for directly producing aromatics from syngas, and the preparation method and use thereof.

### BACKGROUND

Conversion of coal, natural gas, and biomass to syngas (a gas mixture consisting CO and H₂), and a subsequent Fischer-Tropsch reaction over iron-based or cobalt-based catalysts under a suitable reaction condition to produce light olefins, liquid fuels, lubricating oils, high-quality solid waxes, and aromatic hydrocarbons, not only satisfy the increasingly stringent environmental requirements and alleviates the environmental problems during coal utilization, but also expands the sources of fuel oil and provides an important substitute for petroleum resources. Aromatic hydrocarbons are important platform chemicals for the synthesis of dyes, artificial resins, pesticides, and pharmaceuticals, mainly produced by the reforming and hydrogenation of petroleum and the cracking and hydrogenation of gasoline. Thus, converting carbon monoxide into high value-added platform chemicals such as aromatics can effectively reduce human dependence on traditional fossil energy.

At present, production of aromatics from syngas is mainly realized by first producing intermediates such as methanol, dimethyl ether, and olefins, and then producing aromatics. In the process of converting intermediates into aromatics, molecular sieve catalysts have been one of the most used catalysts for aromatization. Among others, the ZSM-5 zeolite has been widely used, for their excellent performance of aromatization (such as suitable acidity and shape selectivity). In industrial practice, techniques of producing methanol, dimethyl ether, or olefins by hydrogenation of carbon monoxide have been relatively developed. Furthermore, producing aromatics by aromatization of purified and isolated intermediates with the aid of zeolite catalysts has been put into practice. At present, the production of aromatics from syngas are mainly realized by the indirect method, which are commercially undesirable due to huge equipment cost and high energy consumption, because, reaction conditions are considerably different for the step of hydrogenation of carbon monoxide to produce intermediates and the step of catalyzed conversion of the intermediates to aromatics. Therefore, how to realize the direct production of aromatics from syngas has been become one of the hot research topics.

Recent studies show that to develop efficient bifunctional catalysts is the key to solving the problem. Catalysts containing metal oxides and zeolites have been a focus of research, wherein the production of aromatics from syngas can be realized by, hydrogenation of carbon monoxide and cracking which occur in the oxides, and subsequent conversion into aromatics catalyzed by the zeolite. However, catalysts in previous studies are mainly formed of zeolite supported with metal salts or physical mixtures of metal oxides and zeolites, and they exhibit low selectivity for aromatics but high selectivity for carbon dioxide and methane, limiting the application of direct production of aromatics from carbon monoxide.

### SUMMARY

Based on non-precious metals, one object of the present invention is to provide a core-shell iron-based catalyst for directly producing aromatics from syngas, and the preparation method and use thereof. The encapsulated metal oxide nanoparticles in the catalyst are highly dispersed in the zeolite, with small and stable particle sizes. The catalyst exhibits high CO conversion and high aromatic selectivity, high concentration of aromatic products, and low selectivity for by-products CO₂ and CH₄, which solves the prior art problems of low aromatic selectivity and production, high selectivity for by-products CO₂ and CH₄, and low CO utilization during the direct production of aromatics from syngas.

The present invention is realized by a core-shell iron-based catalyst for directly producing aromatics from syngas, wherein the catalyst comprises a shell consisting of nano ZSM-5 molecular sieve having a silica to alumina molar ratio of 30-200, and a core consisting of surface-modified metal-oxide nano particles; the metal-oxide nano particles have an evenly distributed particle size of 1-3 nm, and a metal content of 0.1%wt-7%wt; the aromatics are C7-C11 aromatics.

The surface-modified metal-oxide nano particles are produced by the following steps:
1) production of uniform-sized metal-oxide nano particles by hydrothermal synthesis, taking a metal salt as a metal source, anhydrous sodium acetate as an alkali source, ethylene glycol as a solvent, ethylenediamine as a structure directing agent, and polyvinylpyrrolidone as a surfactant: mixing the metal salt, anhydrous sodium acetate, ethylene glycol, ethylenediamine, and polyvinylpyrrolidone according to a molar ratio of 1:(2-4):(27-35):(3-5):(0.7-0.9), stirring at 30-60°C until dissolved to obtain a nano particle precursor solution, and then introducing the nano particle precursor solution to a hydrothermal autoclave to allow a hydrothermal reaction to occur at 180-210°C for 5-15 hours to obtain a solid; washing the solid using deionized water and absolute ethanol after cooling to room temperature, and drying under vacuum at 60°C to obtain the uniform-sized metal-oxide nano particles;
2) surface modification of the metal-oxide nano particles using an organosilane agent: dispersing the metal-oxide nano particles obtained in step 1) in an ethanol-deionized water solution to obtain a suspension, subjecting the suspension to sonication, and adding the organosilane agent to the suspension; stirring in a 30-60°C water bath for 8-36 hours to obtain a solid, washing the solid with absolute ethanol, drying under vacuum at 60°C, and grinding to obtain the surface-modified metal-oxide nano particles.

Preferably, the metal salt in step 1) is iron chloride, iron nitrate, and iron sulfate.

The metal-oxide nano particles are nano Fe₃O₄ particles.

Preferably, in step 1), the nano particle precursor solution is obtained by stirring at 40°C, and the hydrothermal reaction is carried out at 200°C for 12 hours.

Preferably, in step 2), the organosilane agent is 3-aminopropyltrimethoxysilane, 3-aminopropyltriethoxysilane, or 3-glycidoxypropyltrimethoxysilane.

Preferably, in step 2), a volume ratio of ethanol to deionized water in the ethanol-deionized water solution is 1:1, and a weight ratio of the organosilane agent to the metal-oxide nano particles is 1:(650-700).

By employing specific reaction conditions, the metal-oxide nano particles obtained in step 1) exhibit a uniform particle size and a rough surface, which are beneficial to the introduction of organosilyl groups in the later stage, improving the efficiency and capacity of surface modification of the metal-oxide nano particles.

Furthermore, the nano ZSM-5 zeolite is produced by taking aluminum isopropoxide as an aluminum source, tetraethyl orthosilicate as a silicon source, tetrapropylammonium hydroxide as a template, and organosilane as a pore-forming agent, adding into deionized water to allow a one-pot reaction to occur to obtain a zeolite precursor solution, and forming the nano ZSM-5 zeolite during a hydrothermal synthesis process.

The silica to alumina molar ratio of the nano ZSM-5 zeolite is preferably 30-100, and more preferably 30.

The catalyst is produced by the following steps:
(1) Production of the surface-modified metal-oxide nano particles: mixing the metal salt, anhydrous sodium acetate, ethylene glycol, ethylenediamine, and polyvinylpyrrolidone according to a molar ratio of 1:(2-4):(27-35):(3-5):(0.7-0.9), stirring at 30-60°C until dissolved to obtain a nano particle precursor solution, and then introducing the nano particle precursor solution to a hydrothermal autoclave to allow a hydrothermal reaction to occur at 180-210°C for 5-15 hours to obtain a solid; washing the solid using deionized water and absolute ethanol after cooling to room temperature, and drying under vacuum at 60°C to obtain uniform-sized metal-oxide nano particles; dispersing the metal-oxide nano particles in an ethanol-deionized water solution to obtain a suspension, subjecting the suspension to sonication, and adding the organosilane agent to the suspension; stirring in a 30-60°C water bath for 8-36 hours to obtain a solid, washing the solid with absolute ethanol, drying under vacuum at 60°C, and grinding to obtain the surface-modified metal-oxide nano particles.
(2) Production of a zeolite precursor solution: mixing aluminum isopropoxide, tetraethyl orthosilicate, tetrapropylammonium hydroxide, and deionized water wherein a molar ratio of aluminum isopropoxide, tetraethyl orthosilicate, tetrapropylammonium hydroxide, and deionized water is 1:(40-300):(11-60):(1500-7500), and stirring to obtain a mixed solution; refluxing the mixed solution under stirring at 70-95°C for 20 hours, and adding an organosilane agent to the mixed solution and stirring for 6 hours to obtain the zeolite precursor solution. The organosilane agent is identical to that used in the surface modification of the metal-oxide nano particles, because molecules of the same organosilane agent can undergo a self-condensation reaction, such that the crystal nucleus of zeolite exhibits higher affinity to metal oxides, which makes it easier for the crystal nucleus to be adsorbed onto the surface of the metal oxide nano particles.
(3) Mixing the surface-modified metal-oxide nano particles produced in step (1) and the zeolite precursor solution produced in step (2) according to a mass ratio of 1:(50-2600) under sonication to obtain a mixture, introducing the mixture to a hydrothermal autoclave to allow a hydrothermal reaction to occur in a homogeneous chemical reactor at 140-200°C for 2-6 days at 1-10 rpm, cooling to room temperature and centrifuging to obtain a solid; washing the solid using deionized water and absolute ethanol until a supernatant has a pH value lower than 8, drying at 60°C, calcining in a muffle furnace at 200-350°C for 5-15 hours and then calcining at 500-600°C for 2-8 hours, grinding to obtain the catalyst.

Preferably, in step (2), a molar amount of the organosilane agent is 1%-15% of a molar amount of tetraethyl orthosilicate.

In step (2), the zeolite precursor solution is produced by taking aluminum isopropoxide as an aluminum source, tetraethyl orthosilicate as a silicon source, tetrapropylammonium hydroxide as a template, and organosilane as a pore-forming agent, and adding into deionized water to carry out a one-pot reaction.

In step (3), the hydrothermal reaction is carried out at 170°C for 3 days at 2 rpm, and the solid is calcined at 330°C for 10 hours and then calcined at 550°C for 5 hours; the metal content is 5%wt.

The present invention also involves the use of the catalyst, particularly, comprising the following steps: subjecting the catalyst to a roller compaction and granulation process, then mixing the catalyst with quartz sand with a particle size of 40-60 mesh, and adding into a fixed bed reactor with a feed gas to allow a reduction reaction to occur at 300°C for 12 hours; further reacting at 2 MPa and 280°C wherein a space velocity of the feed gas is 2400-9000 h⁻¹ to produce aromatics from the feed gas; the aromatics are C7-C11 aromatics.

Furthermore, a ratio of CO to H₂ in the feed gas is 1:1.

The space velocity of the feed gas is preferably 2400-6000 h⁻¹, and more preferably 2400 h⁻¹.

Furthermore, the space velocity of the feed gas is regulated by regulating a gas flow rate across a catalyst bed. Particularly, the feed gas comprises a small amount of inert gas as an internal standard for determining a relative amount of each component in the product, wherein the inert gas includes but is not limited to nitrogen gas and argon gas; preferably, nitrogen gas is used as the internal standard.

The present invention has the following beneficial effects:
1) The encapsulated metal oxide nanoparticles in the catalyst are highly dispersed in the zeolites, with small and stable particle sizes. The catalyst exhibits high CO conversion of up to 42.6%, high aromatic selectivity of up to 47.6% among total hydrocarbons (and up to 78.1% in oil phase), high concentration of aromatic products, and low selectivity for by-products CO₂ (only about 18.9%) and CH₄ (only about 14.0%), which solves the prior art problems of low aromatic selectivity and production, high selectivity for by-products CO₂ and CH₄, and low CO utilization during the direct production of aromatics from carbon monoxide.
2) When producing aromatics from the hydrogenation of carbon oxide using the catalyst of the present invention, it is not necessary to replace the catalyst since the catalyst can get reduced by the feed gas without the use of other reducing gases. Under optimized conditions, the catalyst maintains its stable activity after participating in a continuous reaction for 40 hours, without obvious occurrence of deactivation, making it possible to efficiently, stably, and continuously produce aromatics.

### BRIEF DESCRIPTION OF THE DRAWINGS

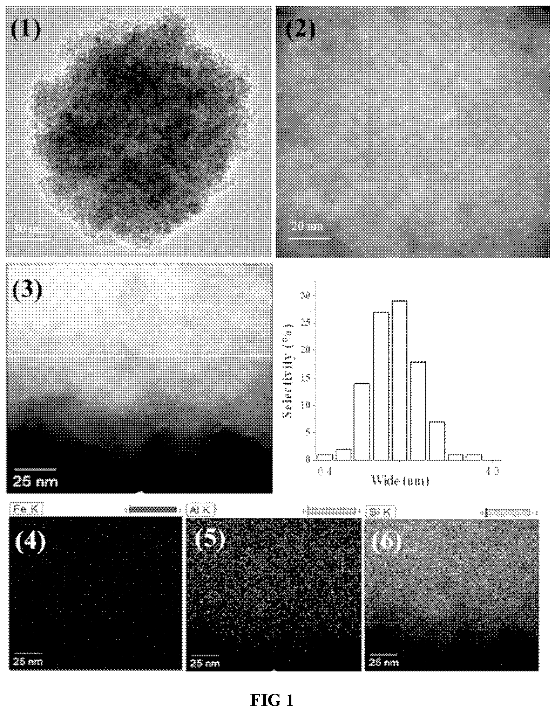

FIG 1 includes images of (1) TEM and (2-3) HAADF-TEM showing the morphology of the catalyst FCZ-1 produced in example 1. The inset in (3) shows the size distribution of metal oxide particles size of 1-3 nm in the FCZ-1 catalyst. (4-6) The corresponding distribution of iron, silicon, and aluminium in the FCZ-1 catalyst.

### DETAILED DESCRIPTION OF THE EMBODIMENTS

The following contents are for further describing the present invention, but not for limiting the present invention.

Example 1:
(1) Producing catalyst
   (i) Production of uniform-sized Fe₃O₄ nano particles by hydrothermal synthesis: Ferric chloride, sodium acetate, ethylene glycol, ethylenediamine, and polyvinylpyrrolidone were mixed according to a molar ratio of 1:2.9:32:4:0.8, stirring at 40°C until dissolved to obtain a nano particle precursor solution. The nano particle precursor solution was introduced to a hydrothermal autoclave to allow a hydrothermal reaction to occur at 200°C for 12 hours to obtain a solid; the solid was washed using deionized water and absolute ethanol after cooled to room temperature, and dried under vacuum at 60°C overnight to obtain the uniform-sized Fe₃O₄ nano particles;
   (ii) Surface modification of the Fe₃O₄ nano particles using an organosilane agent: The Fe₃O₄ nano particles obtained in step (i) were dispersed in an ethanol-deionized water solution to obtain a suspension (wherein a volume ratio of ethanol to deionized water in the ethanol-deionized water solution was 1:1). The suspension was subjected to sonication, followed by the addition of 3-aminopropyltrimethoxysilane, wherein a weight ratio of 3-aminopropyltrimethoxysilane to the metal-oxide nano particles is 1:670. The suspension was then transferred to a flask in which it was stirred in a 40°C water bath for 24 hours to obtain a solid. The solid was washed with absolute ethanol for 3-5 times, then dried under vacuum at 60°C overnight, and ground to obtain surface-modified Fe₃O₄ nano particles.
   (iii) Production of a nano ZSM-5 zeolite precursor solution: Aluminum isopropoxide, tetraethyl orthosilicate, a 25%wt aqueous solution of tetrapropylammonium hydroxide, and deionized water were mixed under stirring, wherein a molar ratio of aluminum isopropoxide, tetraethyl orthosilicate, tetrapropylammonium hydroxide, and deionized water was 1:60:11.5:1500, to obtain a mixed solution. The mixed solution was refluxed under stirring at 90°C for 20 hours, followed by the addition of 3-aminopropyltrimethoxysilane, wherein a molar amount of the 3-aminopropyltrimethoxysilane was 5% of a molar amount of tetraethyl orthosilicate. The mixed solution was then stirred for 6 hours to obtain the zeolite precursor solution.
   (iv) Production of core-shell catalyst (Fe₃O₄ particles encapsulated by ZSM-5 nano zeolite) by hydrothermal synthesis: The surface-modified Fe₃O₄ nano particles produced in step (ii) and the zeolite precursor solution produced in step (iii) were mixed according to a mass ratio of 1:125 under sonication to obtain a mixture. The mixture was introduced to a hydrothermal autoclave to allow a hydrothermal reaction to occur in a homogeneous chemical reactor at 170°C for 3 days at 2 rpm. The resultant was then cooled to room temperature and centrifuging to obtain a solid. The solid was washed using deionized water and absolute ethanol until the supernatant had a pH value lower than 8. Then the solid was dried at 60°C overnight, calcined in a muffle furnace at 330°C for 10 hours and then calcined at 550°C for 5 hours, and ground to obtain the catalyst (named as FCZ-1).
(2) Application of the catalyst
   (i) 0.5 g of the catalyst FCZ-1 was weighed out and subjected to a roller compaction and granulation process. Then the catalyst was mixed with 0.5 g of quartz sand with a particle size of 40-60 mesh, and added into a fixed bed reactor with a feed gas to allow a reduction reaction to occur at 300°C for 12 hours. Then the conditions in the reactor were adjusted to allow the reaction to occur at 2 MPa and 280°C wherein a space velocity of the feed gas was 2400 h⁻¹ to produce aromatics from the feed gas.
   (ii) After the reaction became stable, the tail gas from the reaction was collected by a gas bag and analyzed using gas chromatography (FID, TCD) for online detection of its composition. The liquid components (in water phase and oil phase) obtained from the reaction were cooled and collected by a cold trap connected to the fixed bed. After the reaction was complete, the liquid components were weighed. Among others, hydrocarbon content in the water-phase products was extremely low and negligible (<1%). The oil-phase products were analyzed by using off-line gas chromatography-mass spectrometry (GC-MS). The chromatography analysis was carried out by the external standard method for quantitative analysis.

### Example 2

The catalyst was produced according to the method of Example 1. The application was different from Example 1 in that the space velocity of the feed gas was 6000 h⁻¹.

### Example 3

The catalyst was produced according to the method of Example 1. The application was different from Example 1 in that the space velocity of the feed gas was 9000 h⁻¹.

### Example 4

The catalyst was produced according to the method of Example 1 except that the molar ratio of aluminum isopropoxide, tetraethyl orthosilicate, tetrapropylammonium hydroxide, and deionized water was 1:100:19.2:2500, and was named as FCZ-2. The application was carried out according to Example 1.

### Example 5

The catalyst was produced according to the method of Example 1 except that the molar ratio of aluminum isopropoxide, tetraethyl orthosilicate, tetrapropylammonium hydroxide, and deionized water was 1:200:38.3:5000, and was named as FCZ-3. The application was carried out according to Example 1.

### Comparative Example 1

The catalyst used in Comparative Example 1 consisted of ZSM-5 zeolite supported with iron.
(1) Producing catalyst
   (i) Production of a nano ZSM-5 zeolite: Aluminum isopropoxide, tetraethyl orthosilicate, a 25%wt aqueous solution of tetrapropylammonium hydroxide, and deionized water were mixed under stirring, wherein a molar ratio of aluminum isopropoxide, tetraethyl orthosilicate, tetrapropylammonium hydroxide, and deionized water was 1:60:11.5:1500 (the number 1500 excluded the water in the 25%wt aqueous solution), to obtain a mixed solution. The mixed solution was refluxed under stirring at 90°C for 20 hours, followed by the addition of 3-aminopropyltrimethoxysilane, wherein a molar amount of the 3-aminopropyltrimethoxysilane was 5% of a molar amount of tetraethyl orthosilicate. The mixed solution was introduced to a hydrothermal autoclave to allow a hydrothermal reaction to occur in a homogeneous chemical reactor at 170°C for 5 days at 2 rpm. The resultant was then cooled to room temperature and centrifuging to obtain a solid. The solid was washed using deionized water and absolute ethanol until the supernatant had a pH value lower than 8. Then the solid was dried at 60°C overnight, calcined in a muffle furnace at 330°C for 10 hours and then calcined at 550°C for 5 hours, and ground to obtain the nano ZSM-5 zeolite.
   (ii) Production of catalyst (ZSM-5 zeolite supported with iron): 1 g of the zeolite produced in step (i) and 0.46 g of ferric nitrate nonahydrate were mixed in 2 ml of deionized water, the mixture was stirred under room temperature for 4 hours to allow even scattering of iron ions over the zeolite. The obtained dispersion was then dried in a 60°C oven and then calcined in a muffle furnace at 550°C for 4 hours, and ground to obtain the catalyst (named as FSZ).
(2) Application of the catalyst
   (i) 0.5 g of the catalyst FSZ produced in step (1) was weighed out and subjected to a roller compaction and granulation process. Then the catalyst was mixed with 0.5 g of quartz sand with a particle size of 40-60 mesh, and added into a fixed bed reactor with a feed gas to allow a reduction reaction to occur at 300°C for 12 hours. Then the conditions in the reactor were adjusted to allow the reaction to occur at 2 MPa and 280°C wherein a space velocity of the feed gas was 2400 h⁻¹ to produce C7-C11 aromatics from the feed gas.
   (ii) After the reaction became stable, the tail gas from the reaction was collected by a gas bag and analyzed using gas chromatography (FID, TCD) for online detection of its composition. The liquid components (in water phase and oil phase) obtained from the reaction were cooled and collected by a cold trap connected to the fixed bed. After the reaction was complete, the liquid components were weighed. Among others, hydrocarbon content in the water-phase products was extremely low and negligible (<1%). The oil-phase products were analyzed by using off-line gas chromatography-mass spectrometry (GC-MS). The chromatography analysis was carried out by the external standard method for quantitative analysis.

Table 1 shows the reaction conditions, conversion rates, and aromatics selectivity of Examples 1-4 and Comparative Example 1.

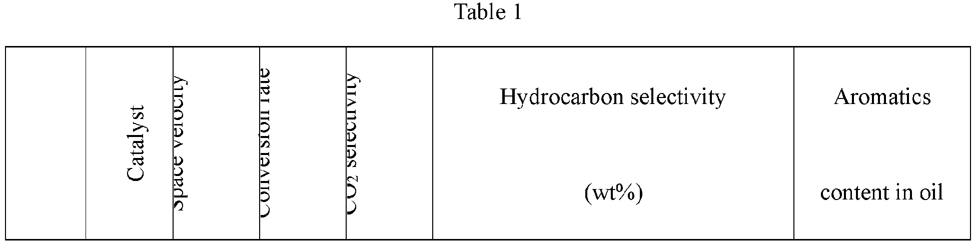

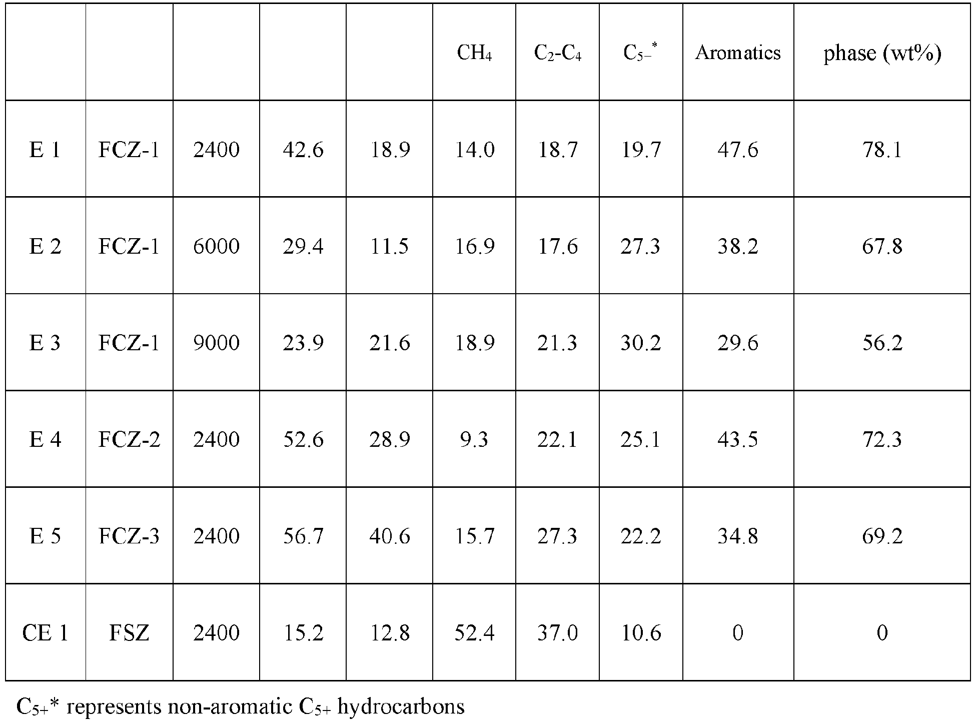

By comparing the results of Example 1 and Comparative Example 1, it can be concluded that, under identical conditions, the core-shell structured catalyst FCZ-1 exhibited higher CO conversion, higher selectivity for aromatics, and lower selectivity for methane, indicating that the structure of nano ZSM-5 encapsulating iron particles is capable of forcing the products of hydrogenation of carbon monoxide to further enter the pores in the zeolite to carry out a second reaction. The carbon monoxide will be dissociated into C^{∗} intermediates which takes place over the surface of the iron; in the presence of the core-shell structure, the intermediates will then move to the ZSM-5 zeolite to carry out C-C coupling and aromatization, which reduces consequent hydrogenation of the intermediates over the iron surfaces and thus reduces the formation of by product methane.

As can be concluded from the results of Examples 1-3, under identical catalyst conditions, as the space velocity of feed gas increased, the selectivity for aromatics and the aromatics content in oil phase both decreased, indicating that lower space velocity is more suitable for producing aromatics by the hydrogenation of carbon monoxide. By comparing the distribution of hydrocarbons in the products, it can be concluded that, with lower space velocity which makes the feed gas stay over the catalyst for a longer period, alkenes formed by the hydrogenation of monoxide over the surfaces of iron particles will further carry out aromatization over the zeolite shell to form aromatics. However, the selectivity for CO₂ was higher in both Examples 1 and 3, indicating that the space velocity being too low or too high will promote water gas shift reaction, which limits the utilization of carbon element in feed gas. The results show that lower space velocity gives higher selectivity for aromatics while the space velocity being too low will intensify water gas shift reaction. The space velocity of feed gas is preferably 2400-6000 h⁻¹, and more preferably 2400 h⁻¹.

As can be concluded from the results of Examples 1, 4, and 5, as the silica to alumina molar ratio of the nano ZSM-5 zeolite increased (the silica to alumina molar ratio was 30 for FCZ-1, 50 for FCZ-2, and 100 for FCZ-3), the selectivity for aromatics largely decreased, while the selectivity for CO₂ and C₂-C₄ hydrocarbons increased, indicating that the increase in the silica to alumina molar ratio of the nano ZSM-5 zeolite will limit the production of aromatics. The increase in the silica to alumina molar ratio lowers the acid site density of the zeolite, which limits subsequent aromatization of the intermediates, but instead promotes hydrogenation to produce more C₂-C₄ hydrocarbons.

In view of the above, the silica to alumina molar ratio is preferably 30 and the space velocity is preferably 2400 h⁻¹, which give a CO conversion of 42.6%, and an aromatic selectivity of 47.6%. In summary, the core-shell catalyst of the present invention exhibits excellent selectivity for aromatics and low selectivity for CO₂ and methane, and thus has a good application prospect.

## Claims

1. A core-shell iron-based catalyst for directly producing aromatics from syngas, **characterized in that**, the catalyst comprises a shell consisting of nano ZSM-5 zeolite having a silica to alumina molar ratio of 30-200, and a core consisting of surface-modified metal-oxide nano particles; the metal-oxide nano particles have a particle size of 1-3 nm, and a metal content of 0.1%wt-7%wt.

2. The catalyst according to claim 1, **characterized in that**, the surface-modified metal-oxide nano particles are produced by the following steps:
1) production of metal-oxide nano particles by hydrothermal synthesis, taking a metal salt as a metal source, anhydrous sodium acetate as an alkali source, ethylene glycol as a solvent, ethylenediamine as a structure directing agent, and polyvinylpyrrolidone as a surfactant: mixing the metal salt, anhydrous sodium acetate, ethylene glycol, ethylenediamine, and polyvinylpyrrolidone according to a molar ratio of 1:(2-4):(27-35):(3-5):(0.7-0.9), stirring at 30-60°C until dissolved to obtain a nano particle precursor solution, and then introducing the nano particle precursor solution to a hydrothermal autoclave to allow a hydrothermal reaction to occur at 180-210°C for 5-15 hours to obtain a solid; washing the solid using deionized water and absolute ethanol after cooling to room temperature, and drying under vacuum at 60°C to obtain the uniform-sized metal-oxide nano particles;
2) surface modification of the metal-oxide nano particles using an organosilane agent: dispersing the metal-oxide nano particles obtained in step 1) in an ethanol-deionized water solution to obtain a suspension, subjecting the suspension to sonication, and adding the organosilane agent to the suspension; stirring in a 30-60°C water bath for 8-36 hours to obtain a solid, washing the solid with absolute ethanol, drying under vacuum at 60°C, and grinding to obtain the surface-modified metal-oxide nano particles.

3. The catalyst according to claim 2, **characterized in that**, the metal salt in step 1) is iron chloride, iron nitrate, and iron sulfate; in step 1), the nano particle precursor solution is obtained by stirring at 40°C, and the hydrothermal reaction is carried out at 200°C for 12 hours.

4. The catalyst according to claim 2, **characterized in that**, in step 2), the organosilane agent is 3-aminopropyltrimethoxysilane, 3-aminopropyltriethoxysilane, or 3-glycidoxypropyltrimethoxysilane; in step 2), a volume ratio of ethanol to deionized water in the ethanol-deionized water solution is 1:1, and a weight ratio of the organosilane agent to the metal-oxide nano particles is 1:(650-700).

5. The catalyst according to claim 1 or 2, **characterized in that**, the silica to alumina molar ratio of the nano ZSM-5 zeolite is 30-100.

6. The catalyst according to claim 5, **characterized in that**, the silica to alumina molar ratio of the nano ZSM-5 zeolite is 30.

7. A method for producing the catalyst of claim 1, **characterized in that**, it comprises the following steps:
(1) mixing a metal salt, anhydrous sodium acetate, ethylene glycol, ethylenediamine, and polyvinylpyrrolidone according to a molar ratio of 1:(2-4):(27-35):(3-5):(0.7-0.9), stirring at 30-60°C until dissolved to obtain a nano particle precursor solution, and then introducing the nano particle precursor solution to a hydrothermal autoclave to allow a hydrothermal reaction to occur at 180-210°C for 5-15 hours to obtain a solid; washing the solid using deionized water and absolute ethanol after cooling to room temperature, and drying under vacuum at 60°C to obtain uniform-sized metal-oxide nano particles; dispersing the metal-oxide nano particles in an ethanol-deionized water solution to obtain a suspension, subjecting the suspension to sonication, and adding the organosilane agent to the suspension; stirring in a 30-60°C water bath for 8-36 hours to obtain a solid, washing the solid with absolute ethanol, drying under vacuum at 60°C, and grinding to obtain surface-modified metal-oxide nano particles;
(2) mixing aluminum isopropoxide, tetraethyl orthosilicate, tetrapropylammonium hydroxide, and deionized water wherein a molar ratio of aluminum isopropoxide, tetraethyl orthosilicate, tetrapropylammonium hydroxide, and deionized water is 1:(40-300):(11-60):(1500-7500), and stirring to obtain a mixed solution; refluxing the mixed solution under stirring at 70-95°C for 20 hours, and adding an organosilane agent to the mixed solution and stirring for 6 hours to obtain the zeolite precursor solution; the organosilane agent is identical to that used in step (1);
(3) mixing the surface-modified metal-oxide nano particles produced in step (1) and the zeolite precursor solution produced in step (2) according to a mass ratio of 1:(50-2600) under sonication to obtain a mixture, introducing the mixture to a hydrothermal autoclave to allow a hydrothermal reaction to occur in a homogeneous chemical reactor at 140-200°C for 2-6 days, cooling to room temperature and centrifuging to obtain a solid; washing the solid using deionized water and absolute ethanol until a supernatant has a pH value lower than 8, drying, calcining at 200-350°C for 5-15 hours and then calcining at 500-600°C for 2-8 hours, and grinding to obtain the catalyst.

8. The method according to claim 7, **characterized in that**, in step (2), a molar amount of the organosilane agent is 1%-15% of a molar amount of tetraethyl orthosilicate; in step (3), the hydrothermal reaction is carried out at 170°C for 3 days at 2 rpm, and the solid is calcined at 330°C for 10 hours and then calcined at 550°C for 5 hours; the metal content is 5%wt.

9. Use of the catalyst of claim 1, **characterized in that**, it comprises the following steps: subjecting the catalyst to a roller compaction and granulation process, then mixing the catalyst with quartz sand having a particle size of 40-60 mesh, and adding into a fixed bed reactor; introducing a feed gas into the fixed bed reactor to allow a reduction reaction to occur at 300°C for 12 hours; further reacting at 2 MPa and 280°C wherein a space velocity of the feed gas is 2400-9000 h⁻¹ to produce aromatics from the feed gas.

10. The use according to claim 9, **characterized in that**, a ratio of CO to H₂ in the feed gas is 1:1; the space velocity of the feed gas is 2400-6000 h⁻¹.
